# FASCICULE DE BREVET EUROPEEN

(11) **EP 2 992 791 B1**
(45) Date de publication et mention de la délivrance du brevet: **26.04.2017**
(21) Numéro de dépôt: 15182818.3
(22) Date de dépôt: 27.08.2015
(51) Int. Cl.: A47J 31/40, A47J 31/42

(54) **DISPOSITIF DE DISTRIBUTION DE PRODUITS SOLUBLES ET MACHINE A CAFE COMPORTANT UN TEL DISPOSITIF**
VERTEILUNGSVORRICHTUNG FÜR LÖSLICHE PRODUKTE, UND KAFFEEMASCHINE, DIE EINE SOLCHE VORRICHTUNG UMFASST
DEVICE FOR DISPENSING SOLUBLE PRODUCTS AND COFFEE MACHINE COMPRISING SUCH A DEVICE

(30) Priorité: 05.09.2014 FR 1458351
(43) Date de publication de la demande: 09.03.2016
(73) Titulaire: SEB S.A., 69130 Ecully (FR)
(72) Inventeur: MORIN, Gilles, 21490 Varois et Chaignot (FR)
(74) Mandataire: Bourrières, Patrice

(56) Documents cités:
- EP-A1- 2 127 573
- WO-A2-2014/045114

## Description

La présente invention se rapporte au domaine technique général des appareils de production de boissons à base de produits solubles, notamment du café ou du lait, en particulier des machines à café.
Il est connu du document WO8912416 de réaliser un dispositif de distribution de produits solubles destinés à être mélangés avec de l'eau chaude dans une chambre de mélange pour former une boisson, ledit dispositif comportant un réservoir de produit soluble et un organe doseur comprenant une cavité munie d'une ouverture supérieure et d'une ouverture inférieure, ledit organe doseur étant mobile entre une première position de remplissage dans laquelle l'ouverture supérieure est agencée en vis-à-vis d'une ouverture du réservoir et une deuxième position de distribution dans laquelle l'ouverture inférieure est agencée au-dessus d'un orifice disposé dans une partie supérieure de la chambre de mélange.
Lors de d'injection de l'eau chaude dans la chambre de mélange contenant le produit soluble, il se crée un dégagement de vapeur qui va se propager et se condenser dans tout le dispositif de distribution de produits solubles. Ainsi des particules de produits solubles présentes dans les jeux entre les pièces en mouvement vont être hydratées pour constituer une pâte collante qui va augmenter l'effort de manoeuvre de l'organe doseur. En séchant la pâte collante peut bloquer le mouvement de l'organe doseur. Un autre dispositif de distribution de produits solubles est connu du document EP 2 127 573 A1. Un but de la présente invention est de proposer un dispositif de distribution de produits solubles ainsi qu'une machine à café mettant en oeuvre ce dispositif qui présente une conception simple et fiable dans le temps.

Un autre but de la présente invention est de proposer un dispositif de distribution de produits solubles ainsi qu'une machine à café mettant en oeuvre ce dispositif qui présente une conception qui soit économique à mettre en oeuvre.

Ces buts sont atteints avec un dispositif de distribution de produits solubles destinés à être mélangés avec de l'eau chaude dans une chambre de mélange pour former une boisson, ledit dispositif comportant un réservoir de produit soluble et un organe doseur comprenant une cavité munie d'une ouverture supérieure et d'une ouverture inférieure, ledit organe doseur étant mobile entre une première position de remplissage dans laquelle l'ouverture supérieure est agencée en vis-à-vis d'une ouverture du réservoir et une deuxième position de distribution dans laquelle l'ouverture inférieure est agencée au-dessus d'un orifice disposé dans une partie supérieure de la chambre de mélange, caractérisé en ce qu'il comporte un tube de transfert agencé entre l'ouverture inférieure et l'orifice de la chambre de mélange pour guider le produit soluble de la cavité de l'organe doseur vers la chambre de mélange lorsque l'organe doseur est dans la deuxième position de distribution, le tube de transfert ne se trouvant plus en regard de l'orifice de la chambre de mélange lorsque l'organe doseur est dans la première position de remplissage.

Ainsi l'organe doseur se trouve déporté de la partie supérieure de la chambre de mélange d'une distance égale à la hauteur du tube pour créer un espace de fuite de la vapeur. Lors de d'injection de l'eau chaude dans la chambre de mélange contenant le produit soluble, le tube de transfert est décalé pour ne plus être en regard de l'orifice de la chambre de mélange et l'espace de fuite de la vapeur permet de limiter de manière importante la quantité de vapeur atteignant le dispositif de distribution.

De manière préférée, la hauteur du tube est supérieure à 10 millimètres, et de manière encore plus préférée supérieure à 20 millimètres.

Lors du transfert de produit soluble de l'organe doseur vers la chambre de mélange, le tube de transfert garantit un transfert sans fuite du produit qui pourrait polluer le dispositif.

Avantageusement, l'organe doseur et le tube de transfert sont liés mécaniquement.

Cette disposition permet d'obtenir un système mécanique simple, l'organe doseur et le tube de transfert formant une seule partie à entrainer pour réaliser le transfert d'une dose de produit soluble.

De préférence, l'organe doseur est agencé entre une plaque supérieure solidaire du réservoir, comprenant une ouverture disposée en vis-à-vis de l'ouverture du réservoir, et une plaque inférieure comprenant une ouverture disposée à l'aplomb de l'orifice de la chambre de mélange.

Cette disposition permet de maintenir une dose de produit soluble dans la cavité de l'organe doseur lors du mouvement de transfert de l'organe doseur de la première position de remplissage vers la deuxième position de distribution.

Avantageusement, l'organe doseur est mobile dans une position intermédiaire entre la première position et la deuxième position dans laquelle l'ouverture supérieure de l'organe doseur est obturée par la plaque supérieure et dans laquelle l'ouverture inférieure est obturée par la plaque inférieure.

Ainsi, dans cette position intermédiaire de l'organe doseur, la dose de produit soluble est isolée dans la cavité lors du mouvement de transfert de l'organe doseur de la première position de remplissage vers la deuxième position de distribution. Il ne peut y avoir un début de distribution du produit soluble créant un espace dans la cavité qui serait compensé par une arrivée de produit soluble du réservoir.

Avantageusement, le dispositif comporte un obturateur agencé au-dessus de l'orifice de la chambre de mélange pour fermer ledit orifice lorsque l'organe doseur est dans la première position de remplissage, l'obturateur ne se trouvant plus en regard de l'orifice de la chambre de mélange lorsque l'organe doseur est dans la deuxième position de distribution.

Ainsi, lorsque l'eau chaude est injectée dans la chambre de mélange contenant le produit soluble en générant de la vapeur, l'obturateur ferme l'orifice de la chambre de mélange pour empêcher la vapeur de s'échapper vers le dispositif de distribution.

De préférence, l'organe doseur, le tube de transfert et l'obturateur sont liés mécaniquement.

Cette disposition permet d'obtenir un système mécanique simple, l'organe doseur, le tube de transfert et l'obturateur formant une seule partie à entrainer pour réaliser le transfert d'une dose de produit soluble.

Avantageusement, l'organe doseur, le tube de transfert et l'obturateur sont mobiles en rotation autour d'un axe Δ.

La mise en oeuvre d'un mouvement de rotation des différentes pièces permet d'obtenir un système mécanique simple, compact et économique à réaliser.

De préférence, l'organe doseur, le tube de transfert et l'obturateur sont entrainés de la première position de remplissage à la deuxième position de distribution par des moyens de manoeuvre comportant un levier déplacé manuellement et l'organe doseur, le tube de transfert et l'obturateur sont entrainés de la deuxième position de distribution à la première position de remplissage par des moyens de rappel comportant, notamment, un ressort de rappel.

Une telle solution comportant une phase manuelle de manoeuvre pour le transfert d'une dose de produit soluble et une phase de retour automatique permet de réaliser un dispositif de distribution simple et très économique à mettre en oeuvre.

Avantageusement, l'obturateur comporte des moyens de maintien en pression dudit obturateur sur la partie supérieure de la chambre de mélange lorsque l'organe doseur est dans la première position pour fermer l'orifice de manière étanche à la vapeur.

Cette disposition permet d'éviter toute fuite de la vapeur vers le dispositif de distribution lors de d'injection de l'eau chaude dans la chambre de mélange contenant le produit soluble qui est le moment où la vapeur est générée.

De manière avantageuse, les moyens de maintien en pression comportent un ressort.

De préférence, l'obturateur et le tube de transfert sont disposés sur un disque agencé sous la plaque inférieure.

Avantageusement, le disque, la plaque inférieure et l'organe doseur sont mobiles respectivement le long de l'axe Δ.

De préférence, le dispositif comporte des moyens de mise en pression selon l'axe Δ de l'organe doseur sur la plaque supérieure, de la plaque inférieure sur l'organe doseur et du disque sur la plaque inférieure, lesdits moyens de mise en pression comportant notamment un ressort.

Cette disposition permet de rattraper les jeux de fonctionnement entre les différentes pièces en mouvement du dispositif de distribution et, ainsi, de limiter les espaces dans lesquelles le produit soluble pourrait fuir.

Avantageusement, l'organe doseur est en appui sur la plaque supérieure suivant une zone de contact linéaire, et/ou la plaque inférieure est en appui sur l'organe doseur suivant une zone de contact linéaire et/ou le disque est en appui sur la plaque inférieure suivant une zone de contact linéaire.

Cette disposition permet de limiter les surfaces de contact entres les différentes pièces en mouvement et ainsi de diminuer les efforts de manoeuvre. De plus, une zone de contact linéaire agit comme un racleur pour décoller d'éventuelles particules de produit soluble qui pourraient adhérer aux différentes pièces en mouvement.

L'invention concerne également une machine à café comportant un dispositif de distribution de produits solubles tel que précédemment décrit.

L'invention sera mieux comprise à l'étude des modes de réalisation pris à titre nullement limitatif et illustrés dans les figures annexées dans lesquelles :
- La figure 1 illustre une vue de coté en perspective d'une machine à café comportant un dispositif de distribution de produits solubles selon un mode particulier de réalisation de l'invention.
- La figure 2 illustre une vue suivant le plan de coupe Il de la machine à café illustrée sur la figure 1, l'organe doseur du dispositif de distribution étant dans la deuxième position de distribution.
- La figure 3 illustre une vue en perspective du dispositif de distribution de la machine à café illustrée sur la figure 1, l'organe doseur du dispositif de distribution étant dans la deuxième position de distribution.
- La figure 4 illustre une vue en perspective du dispositif de distribution de la machine à café illustrée sur la figure 1, l'organe doseur du dispositif de distribution étant dans la première position de remplissage.
- La figure 5 illustre une vue en perspective éclatée du dispositif de distribution illustré sur la figure 4.
- La figure 6 illustre une vue suivant le plan de coupe VI-VI du dispositif de distribution illustré sur la figure 5.

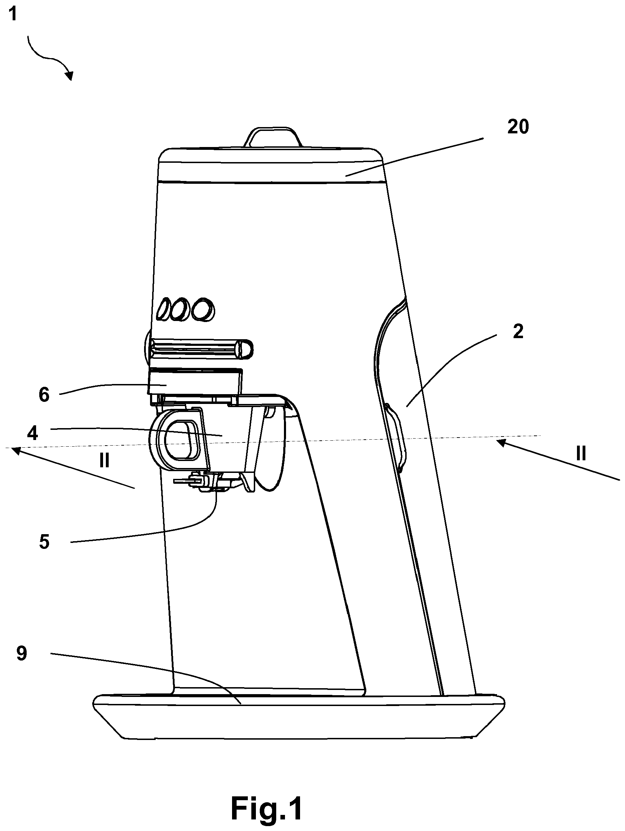

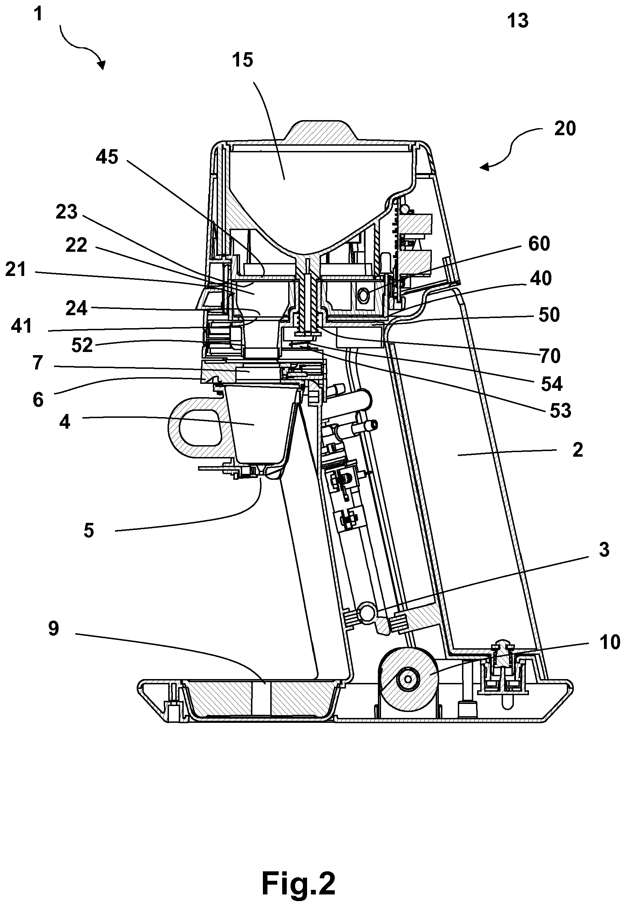

Dans le mode de réalisation représenté aux figures 1 et 2, l'appareil de production de boissons à base de produits solubles est une machine à café 1. La machine à café 1 comporte un réservoir 2 destiné à recevoir de l'eau froide et une chaudière 3 bitube permettant de produire de l'eau chaude pour alimenter une chambre de mélange 4. La machine à café 1 comporte un dispositif 20 de distribution de produits solubles agencé au-dessus de la chambre de mélange 4 et destiné à distribuer une dose de produit soluble dans la chambre de mélange 4. La dose de produit soluble mélangée avec de l'eau chaude permet de réaliser une boisson chaude, notamment un café, qui est distribuée par un orifice de sortie 5 de la chambre de mélange 4 agencé au dessus d'un repose-tasse 9 recevant un récipient (non illustré sur les figures). La machine à café 1 comporte une pompe 10 qui permet le transfert de l'eau contenue dans le réservoir 2 tout d'abord dans la chaudière 3, puis une fois chauffée, dans la chambre de mélange 4. La chambre de mélange 4 comporte une partie supérieure 6 munie d'un orifice 7 d'introduction de la dose de produit soluble et d'un système d'éjection d'eau (non illustré sur les figures) qui est configuré pour produire une pluralité de fins jets d'eau. Cela permet d'impacter le produit soluble de manière homogène et de favoriser la solubilisation dudit produit. Le principe de fonctionnement d'une telle chambre de mélange est décrit dans le document FR2992842.

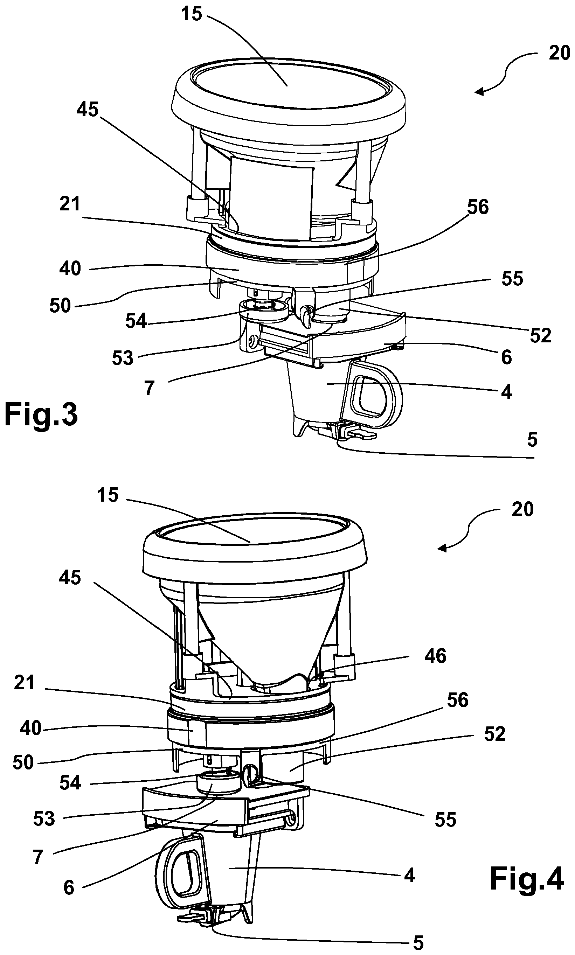

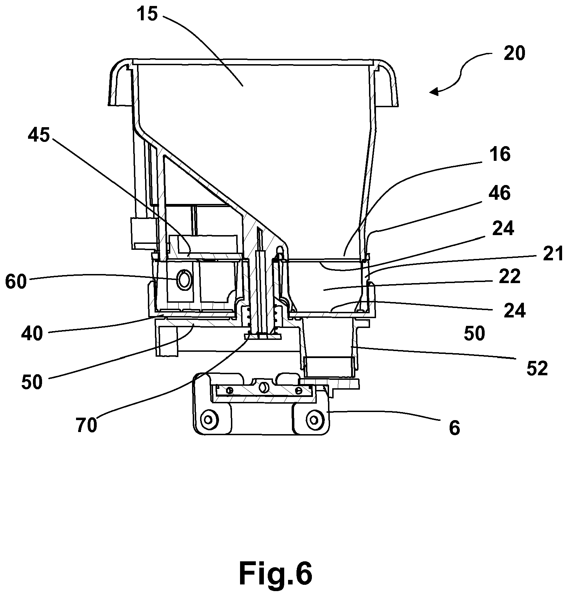

Conformément aux figures 2 à 6, le dispositif 20 de distribution comporte un organe doseur 21 et un réservoir 15 permettant de recevoir le produit soluble. L'organe doseur 21 présente une cavité 22 de forme tubulaire et de section transversale sensiblement ovoïde. La cavité 22 comporte une ouverture supérieure 23 et une ouverture inférieure 24. L'organe doseur 21 est montée mobile en rotation autour d'un axe Δ vertical. Le réservoir 15 comprend une ouverture 16 qui coopère avec l'ouverture supérieure 23 pour remplir l'organe doseur 21 lorsque l'organe doseur 21 est dans une première position de remplissage. L'organe doseur 21 est agencé entre une plaque supérieure 45 et une plaque inférieure 40. La plaque supérieure 45 comprend une ouverture 46 coopérant avec l'ouverture 16 du réservoir pour permettre le passage du produit soluble du réservoir 15 à la cavité 22. La plaque inférieure 40 comporte une ouverture 41 qui coopère avec l'ouverture inférieure 24 pour vider la cavité 22 lorsque l'organe doseur 21 est dans une deuxième position de distribution. Avantageusement, l'organe doseur 21 parcourt entre la première position de remplissage et la deuxième position de distribution une course angulaire de 80 degrés.

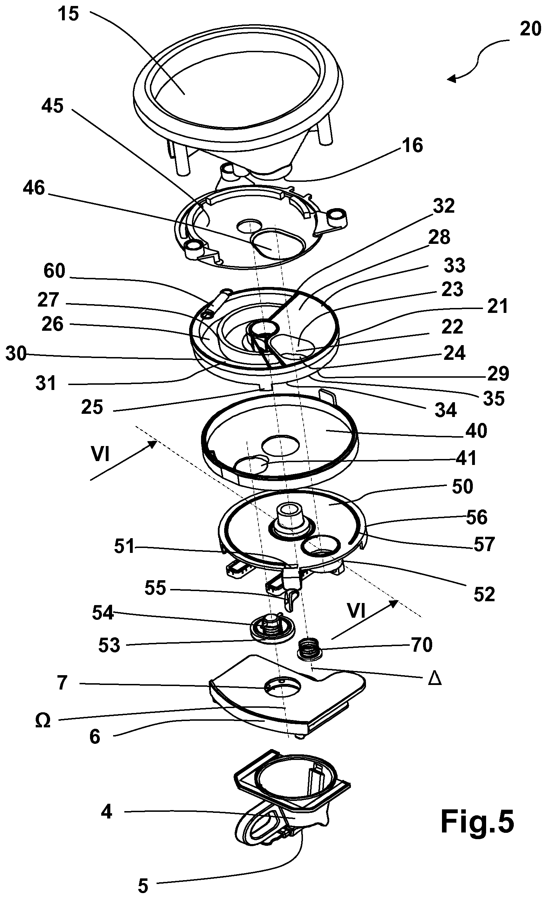

Le dispositif 20 de distribution comporte un disque 50 agencé sous la plaque inférieure 40 et mobile en rotation autour de l'axe Δ. L'organe doseur 21 comporte un ergot 25 (Fig. 5) qui coopère avec un logement 51 agencé sur le disque 50 pour rendre l'organe doseur 21 et le disque 50 solidaires. Ainsi, lorsque l'organe doseur 21 parcourt une course angulaire, le disque 50 parcourt la même course angulaire. Le disque 50 comporte un tube de transfert 52 agencé verticalement sous l'ouverture inférieure 24 de la cavité 22. Lorsque l'organe doseur 21 est dans la deuxième position de distribution, le tube de transfert 52 est agencé entre l'ouverture 41 de la plaque inférieure 40 et l'orifice 7 disposé dans la partie supérieure 6 de la chambre de mélange 4. Ainsi, le tube de transfert 52 forme un conduit qui permet de guider intégralement la dose de produit soluble de l'organe doseur 21 vers la chambre de mélange 4 sans fuite de produit soluble. Lorsque l'organe doseur 21 est dans la première position de remplissage, le tube de transfert 52 ne se trouve plus en regard de l'orifice 7 et il est complètement déporté pour libérer l'espace au-dessus de l'orifice 7.

Le disque 50 comporte un obturateur 53 agencé au-dessus de l'orifice 7 de la chambre de mélange 4 pour fermer ledit orifice lorsque l'organe doseur est dans la première position de remplissage. L'obturateur 53 est agencé sur le disque 50 de manière mobile selon un axe vertical Ω, parallèle à l'axe Δ. Un ressort 54 forme des moyens de maintien en pression selon l'axe vertical Ω de l'obturateur 53 sur la partie supérieure 6 de la chambre de mélange 4 lorsque l'organe doseur 21 est dans la première position pour fermer l'orifice 7 de manière étanche à la vapeur.

Un levier 55 est agencé sur le disque 50 pour former des moyens de manoeuvre de l'organe doseur 21 et du disque 50 muni de l'obturateur 53 et du tube de transfert 52. Le levier 55 s'étend radialement à partir d'un bord externe 56 du disque 50. L'organe doseur 21 et le disque 50 sont entrainés en rotation de la première position de remplissage à la deuxième position de distribution par une action manuelle sur le levier 55. L'organe doseur 21 et le disque 50 sont entrainés en rotation de la deuxième position de distribution à la première position de remplissage par un ressort de rappel 60 agencé dans une cavité 26 de l'organe doseur 21. La cavité 26 comporte une paroi 27 en arc-de-cercle sur laquelle le ressort de rappel 60 est déployé. Sur la figure 5, le ressort de rappel 60 est illustré dans une position non déployée, avant montage.

Le disque 50, la plaque inférieure 40 et l'organe doseur 21 sont mobiles respectivement le long de l'axe Δ. Un ressort 70 forme des moyens de mise en pression selon l'axe Δ de l'organe doseur 21 sur la plaque supérieure 45, de la plaque inférieure 40 sur l'organe doseur 21 et du disque 50 sur la plaque inférieure 40.

Tel que visible sur la figure 5, l'organe doseur 21 présente une forme générale cylindrique et comporte une paroi supérieure 28, une paroi inférieure 29 et une paroi externe 30 cylindrique. La paroi supérieure 28 et un bord supérieur 31 de la paroi externe 30 comportent chacun une excroissance 32, 33 périphérique de section transversale triangulaire qui sont en appui sur la plaque supérieure 45 et forment des zones de contact linéaire. La paroi inférieure 29 comporte le même type d'excroissances 34, 35 sur lesquelles la plaque inférieure 40 est en appui. Le disque 50 comporte une excroissance 57 du même type, agencée à proximité du bord externe 56, qui vient en appui sur la plaque inférieure 40.

En fonctionnement, l'utilisateur remplit le réservoir 15 avec du café soluble. L'organe doseur 21 est dans la première position de remplissage et le café soluble passe par l'ouverture 16 du réservoir 15 et par l'ouverture supérieure 23 pour remplir la cavité 22 de l'organe doseur 21. Dans cette première position, la plaque inférieure 40 obture l'ouverture inférieure 24 de la cavité 22 et l'obturateur 53 ferme l'orifice disposé dans la partie supérieure 6 de la chambre de mélange 4. L'utilisateur remplit le réservoir 2 avec de l'eau et met en marche la machine à café 1. Ensuite, l'utilisateur agit sur le levier 55 pour amener l'organe doseur 21 dans la deuxième position de distribution. Dans une première course angulaire de manoeuvre du levier 55, la cavité 22 est déplacée entre la plaque inférieure 40 qui obture l'ouverture inférieure 24 et la plaque supérieure 45 qui obture l'ouverture supérieure 23 pour isoler une dose de café soluble correspondant au volume de la cavité 22. Lorsque l'utilisateur a manoeuvré le levier 55 sur toute sa course angulaire, l'ouverture inférieure 24 de la cavité est en vis-à-vis de l'ouverture 41 de la plaque inférieure 40 et le tube de transfert 52 est positionné entre l'ouverture 41 de la plaque inférieure 40 et l'orifice 7 disposé dans la partie supérieure 6 de la chambre de mélange 4, en lieu et place de l'obturateur 53. La dose de café soluble est ainsi transférée de la cavité à la chambre de mélange, par gravité.

L'utilisateur relâche ensuite le levier 55. L'organe doseur 21 sous l'action du ressort de rappel 60 est rappelé dans la première position de remplissage. L'obturateur 53 est ramené dans sa position de fermeture de l'orifice 7 disposé dans la partie supérieure 6 de la chambre de mélange 4 en lieu et place du tube de transfert 52. L'utilisateur peut alors poser un récipient sur le repose tasse 9 et lancer la réalisation d'un café.
Bien entendu, l'invention n'est nullement limitée aux modes de réalisation décrits et illustrés qui n'ont été donnés qu'à titre d'exemple. Dans une variante de réalisation, l'organe doseur, le tube de transfert et l'obturateur sont mobiles en translation.
Dans une autre variante de réalisation, l'organe doseur, le tube de transfert et l'obturateur sont déplacés par un dispositif motorisé.

## Revendications

1. Appareil (1) de production de boissons à base de produits solubles comprenant un dispositif (20) de distribution de produits solubles destinés à être mélangés avec de l'eau chaude dans une chambre de mélange (4) pour former une boisson, ledit dispositif (20) comportant un réservoir (15) de produit soluble et un organe doseur (21) comprenant une cavité (22) munie d'une ouverture supérieure (23) et d'une ouverture inférieure (24), ledit organe doseur (21) étant mobile entre une première position de remplissage dans laquelle l'ouverture supérieure (23) est agencée en vis-à-vis d'une ouverture (16) du réservoir (15) et une deuxième position de distribution dans laquelle l'ouverture inférieure (24) est agencée au-dessus d'un orifice (7) disposé dans une partie supérieure (6) de la chambre de mélange (4), ledit dispositif (20) comporte un tube de transfert (52) agencé entre l'ouverture inférieure (24) et l'orifice (7) de la chambre de mélange (4) pour guider le produit soluble de la cavité (22) de l'organe doseur (21) vers la chambre de mélange (4) lorsque l'organe doseur (21) est dans la deuxième position de distribution, le tube de transfert (52) ne se trouvant plus en regard de l'orifice (7) de la chambre de mélange (4) lorsque l'organe doseur (21) est dans la première position de remplissage carctérisé en ce que ledit dispositif (20) comporte un obturateur (53) agencé au-dessus de l'orifice (7) de la chambre de mélange (4) pour fermer ledit orifice (7) lorsque l'organe doseur (21) est dans la première position de remplissage, l'obturateur (53) ne se trouvant plus en regard de l'orifice (7) de la chambre de mélange (4) lorsque l'organe doseur (21) est dans la deuxième position de distribution et en ce que que l'organe doseur (21), le tube de transfert (52) et l'obturateur (53) sont entrainés de la première position de remplissage à la deuxième position de distribution par des moyens de manoeuvre comportant un levier (55) déplacé manuellement et en ce que l'organe doseur (21), le tube de transfert (52) et l'obturateur (53) sont entrainés de la deuxième position de distribution à la première position de remplissage par des moyens de rappel comportant notamment un ressort de rappel (60).

2. Appareil (1) de production de boissons à base de produits solubles selon la revendication 1, **caractérisé en ce que** l'organe doseur (21) et le tube de transfert (52) sont liés mécaniquement.

3. Appareil (1) de production de boissons à base de produits solubles selon l'une quelconque des revendications précédentes, **caractérisé en ce que** l'organe doseur (21) est agencée entre une plaque supérieure (45) solidaire du réservoir (15), comprenant une ouverture (46) disposée en vis-à-vis de l'ouverture (16) du réservoir (15), et une plaque inférieure (40) comprenant une ouverture (41) disposée à l'aplomb de l'orifice (7) de la chambre de mélange (4).

4. Appareil (1) de production de boissons à base de produits solubles selon la revendication 3, **caractérisé en ce que** l'organe doseur (21) est mobile dans une position intermédiaire entre la première position et la deuxième position dans laquelle l'ouverture supérieure (23) de l'organe doseur (21) est obturée par la plaque supérieure (45) et dans laquelle l'ouverture inférieure (24) est obturée par la plaque inférieure (40).

5. Appareil (1) de production de boissons à base de produits solubles selon l'une quelconque des revendications 1 à 4, **caractérisé en ce que** l'organe doseur (21), le tube de transfert (52) et l'obturateur (53) sont liés mécaniquement.

6. Appareil (1) de production de boissons à base de produits solubles selon l'une quelconque des revendications 1 à 5, **caractérisé en ce que** l'organe doseur (21), le tube de transfert (52) et l'obturateur (53) sont mobiles en rotation autour d'un axe Δ.

7. Appareil (1) de production de boissons à base de produits solubles selon l'une quelconque des revendications 1 à 6, **caractérisé en ce que** l'obturateur (53) comporte des moyens de maintien en pression (54) dudit obturateur (53) sur la partie supérieure (6) de la chambre de mélange (4) lorsque l'organe doseur (21) est dans la première position pour fermer l'orifice (7) de manière étanche à la vapeur.

8. Appareil (1) de production de boissons à base de produits solubles selon l'une quelconque des revendications 1 à 7, **caractérisé en ce que** l'obturateur (53) et le tube de transfert (52) sont disposés sur un disque (50) agencé sous la plaque inférieure (40).

9. Appareil (1) de production de boissons à base de produits solubles selon la revendication 8, **caractérisé en ce que** le disque (50), la plaque inférieure (40) et l'organe doseur (21) sont mobiles respectivement le long de l'axe Δ.

10. Appareil (1) de production de boissons à base de produits solubles selon la revendication 9, **caractérisé en ce qu'**il comporte des moyens de mise en pression selon l'axe Δ de l'organe doseur (21) sur la plaque supérieure (45), de la plaque inférieure (40) sur l'organe doseur (21) et du disque (50) sur la plaque inférieure (40), lesdits moyens de mise en pression comportant notamment un ressort (70).

11. Appareil (1) de production de boissons à base de produits solubles selon la revendication 10, **caractérisé en ce que** l'organe doseur (21) est en appui sur la plaque supérieure (45) suivant une zone de contact linéaire, et/ou **en ce que** la plaque inférieure (40) est en appui sur l'organe doseur (21) suivant une zone de contact linéaire et/ou **en ce que** le disque (50) est en appui sur la plaque inférieure (40) suivant une zone de contact linéaire.

12. Machine à café (1) comportant un dispositif de distribution de produits solubles conforme à l'une des revendications 1 à 11.

## Patentansprüche

1. Gerät (1) zur Zubereitung von Getränken auf der Basis löslicher Produkte mit einer Vorrichtung (20) zur Ausgabe von löslichen Produkten, die dafür bestimmt sind, zur Herstellung eines Getränks in einer Mischkammer (4) mit heißem Wasser vermischt zu werden, wobei die Vorrichtung (20) einen Behälter (15) für das lösliche Produkt und ein Dosierelement (21) mit einem Hohlraum (22) umfasst, der mit einer oberen Öffnung (23) und einer unteren Öffnung (24) versehen ist, wobei das Dosierelement (21) zwischen einer ersten Einfüllstellung, in der die obere Öffnung (23) gegenüber einer Öffnung (16) des Behälters (15) angeordnet ist, und einer zweiten Ausgabestellung, in der die untere Öffnung (24) über einer Öffnung (7) angeordnet ist, die sich in einem oberen Teil (6) der Mischkammer (4) befindet, beweglich ist, wobei die Vorrichtung (20) ein Übertragungsrohr (52) umfasst, das zwischen der unteren Öffnung (24) und der Öffnung (7) der Mischkammer (4) angeordnet ist, um das lösliche Produkt von dem Hohlraum (22) des Dosierelements (21) zur Mischkammer (4) zu leiten, wenn sich das Dosierelement (21) in der zweiten Ausgabestellung befindet, wobei sich das Übertragungsrohr (52) nicht mehr gegenüber der Öffnung (7) der Mischkammer (4) befindet, wenn sich das Dosierelement (21) in der ersten Einfüllstellung befindet, **dadurch gekennzeichnet, dass** die Vorrichtung (20) ein Absperrorgan (53) umfasst, das über der Öffnung (7) der Mischkammer (4) angeordnet ist, um die Öffnung (7) zu verschließen, wenn sich das Dosierelement (21) in der ersten Einfüllstellung befindet, wobei sich das Absperrorgan (53) nicht mehr gegenüber der Öffnung (7) der Mischkammer (4) befindet, wenn sich das Dosierelement (21) in der zweiten Ausgabestellung befindet, und dass das Dosierelement (21), das Übertragungsrohr (52) und das Absperrorgan (53) durch Betätigungsmittel, die einen manuell zu bewegenden Hebel (55) aufweisen, von der ersten Einfüllstellung in die zweite Ausgabestellung gebracht werden, und dass das Dosierelement (21), das Übertragungsrohr (52) und das Absperrorgan (53) durch Rückstellmittel, die insbesondere eine Rückstellfeder (60) aufweisen, von der zweiten Ausgabestellung in die erste Einfüllstellung gebracht werden.

2. Gerät (1) zur Zubereitung von Getränken auf der Basis löslicher Produkte nach Anspruch 1, **dadurch gekennzeichnet, dass** das Dosierelement (21) und das Übertragungsrohr (52) mechanisch verbunden sind.

3. Gerät (1) zur Zubereitung von Getränken auf der Basis löslicher Produkte nach einem der vorhergehenden Ansprüche, **dadurch gekennzeichnet, dass** das Dosierelement (21) zwischen einer oberen Platte (45), die fest mit dem Behälter (15) verbunden ist und eine Öffnung (46) aufweist, die sich gegenüber der Öffnung (16) des Behälters (15) befindet, und einer unteren Platte (40) angeordnet ist, die eine Öffnung (41) umfasst, die lotrecht zu der Öffnung (7) der Mischkammer (4) ausgerichtet ist.

4. Gerät (1) zur Zubereitung von Getränken auf der Basis löslicher Produkte nach Anspruch 3, **dadurch gekennzeichnet, dass** das Dosierelement (21) in einer Zwischenstellung zwischen der ersten Stellung und der zweiten Stellung beweglich ist, in der die obere Öffnung (23) des Dosierelements (21) durch die obere Platte (45) versperrt ist und in der die untere Öffnung (24) durch die untere Platte (40) versperrt ist.

5. Gerät (1) zur Zubereitung von Getränken auf der Basis löslicher Produkte nach einem der Ansprüche 1 bis 4, **dadurch gekennzeichnet, dass** das Dosierelement (21), das Übertragungsrohr (52) und das Absperrorgan (53) mechanisch verbunden sind.

6. Gerät (1) zur Zubereitung von Getränken auf der Basis löslicher Produkte nach einem der Ansprüche 1 bis 5, **dadurch gekennzeichnet, dass** das Dosierelement (21), das Übertragungsrohr (52) und das Absperrorgan (53) um eine Achse Δ drehbar sind.

7. Gerät (1) zur Zubereitung von Getränken auf der Basis löslicher Produkte nach einem der Ansprüche 1 bis 6, **dadurch gekennzeichnet, dass** das Absperrorgan (53) Mittel zur Aufrechterhaltung des Druckes (54) dieses Absperrorgans (53) auf dem oberen Teil (6) der Mischkammer (4) umfasst, wenn sich das Dosierelement (21) in der ersten Stellung befindet, um die Öffnung (7) dampfdicht zu verschließen.

8. Gerät (1) zur Zubereitung von Getränken auf der Basis löslicher Produkte nach einem der Ansprüche 1 bis 7, **dadurch gekennzeichnet, dass** das Absperrorgan (53) und das Übertragungsrohr (52) auf einer Scheibe (50) angeordnet sind, die sich unter der unteren Platte (40) befindet.

9. Gerät (1) zur Zubereitung von Getränken auf der Basis löslicher Produkte nach Anspruch 8, **dadurch gekennzeichnet, dass** die Scheibe (50), die untere Platte (40) und das Dosierelement (21) jeweils längs der Achse Δ beweglich sind.

10. Gerät (1) zur Zubereitung von Getränken auf der Basis löslicher Produkte nach Anspruch 9, **dadurch gekennzeichnet, dass** es Mittel zur Beaufschlagung mit Druck längs der Achse Δvon dem Dosierelement (21) auf die obere Platte (45), von der unteren Platte (40) auf das Dosierelement (21) und von der Scheibe (50) auf die untere Platte (40) umfasst, wobei diese Mittel zur Druckbeaufschlagung insbesondere eine Feder (70) aufweisen.

11. Gerät (1) zur Zubereitung von Getränken auf der Basis löslicher Produkte nach Anspruch 10, **dadurch gekennzeichnet, dass** das Dosierelement (21) entlang einer linearen Kontaktfläche auf der oberen Platte (45) abgestützt ist und/oder dass die untere Platte (40) entlang einer linearen Kontaktfläche auf dem Dosierelement (21) abgestützt ist und/oder dass die Scheibe (50) entlang einer linearen Kontaktfläche auf der unteren Platte (40) abgestützt ist.

12. Kaffeemaschine (1) mit einer Vorrichtung zur Ausgabe von löslichen Produkten nach einem der Ansprüche 1 bis 11.

## Claims

1. Appliance (1) for producing beverages based on soluble products comprising a device (20) for dispensing soluble products intended to be mixed with hot water in a mixing chamber (4) to form a beverage, said device (20) having a soluble product tank (15) and a metering member (21) comprising a cavity (22) provided with an upper opening (23) and a lower opening (24), said metering member (21) being movable between a first filling position in which the upper opening (23) is arranged opposite an opening (16) in the tank (15) and a second dispensing position wherein the lower opening (24) is arranged above a hole (7) arranged in an upper part (6) of the mixing chamber (4), said device (20) comprises a transfer tube (52) arranged between the lower opening (24) and the hole (7) of the mixing chamber (4) for guiding the soluble product from the cavity (22) of the metering member (21) to the mixing chamber (4) when the metering member (21) is in the second dispensing position, the transfer tube (52) no longer being opposite the hole (7) in the mixing chamber (4) when the metering member (21) is in the first filling position **characterised in that** said device (20) comprises a plug (53) arranged above the hole (7) of the mixing chamber (4) for closing said hole (7) when the metering member (21) is in the first filling position, the plug (53) no longer being opposite the hole (7) in the mixing chamber (4) when the metering member (21) is in the second dispensing position and **in that** the metering member (21), the transfer tube (52) and the plug (53) are driven from the first filling position to the second dispensing position by actuating means comprising a lever (55) moved manually and **in that** the metering member (21), the transfer tube (52) and the plug (53) are driven from the second dispensing position to the first filling position by return means comprising in particular a return spring (60).

2. Appliance (1) for producing beverages based on soluble products according to claim 1, **characterised in that** the metering member (21) and the transfer tube (52) are mechanically linked.

3. Appliance (1) for producing beverages based on soluble products according to any one of the preceding claims, **characterised in that** the metering member (21) is arranged between an upper plate (45) attached to the tank (15), comprising an opening (46) arranged opposite the opening (16) in the tank (15), and a lower plate (40) comprising an opening (41) arranged above the hole (7) in the mixing chamber (4).

4. Appliance (1) for producing beverages based on soluble products according to claim 3, **characterised in that** the metering member (21) is movable in an intermediate position between the first position and the second position in which the upper opening (23) of the metering member (21) is blocked by the upper plate (45) and in which the lower opening (24) is blocked by the lower plate (40).

5. Appliance (1) for producing beverages based on soluble products according to any one of claims 1 to 4, **characterised in that** the metering member (21), the transfer tube (52) and the plug (53) are mechanically linked.

6. Appliance (1) for producing beverages based on soluble products according to any one of claims 1 to 5, **characterised in that** the metering member (21), the transfer tube (52) and the plug (53) are movable in rotation about an axis Δ.

7. Appliance (1) for producing beverages based on soluble products according to any one of claims 1 to 6, **characterised in that** the plug (53) comprises pressing means (54) for keeping said plug (53) pressed against the upper part (6) of the mixing chamber (4) when the metering member (21) is in the first position for closing the hole (7) in a steamtight manner.

8. Appliance (1) for producing beverages based on soluble products according to any one of claims 1 to 7, **characterised in that** the plug (53) and the transfer tube (52) are arranged on a disc (50) positioned under the lower plate (40).

9. Appliance (1) for producing beverages based on soluble products according to claim 8, **characterised in that** the disc (50), the lower plate (40) and the metering member (21) are movable respectively along axis Δ.

10. Appliance (1) for producing beverages based on soluble products according to claim 9, **characterised in that** it comprises pressing means for keeping the metering member (21) pressed against the upper plate (45), the lower plate (40) pressed against the metering member (21) and the disc (50) pressed against the lower plate (40) along axis Δ, said pressing means comprising in particular a spring (70).

11. Appliance (1) for producing beverages based on soluble products according to claim 10, **characterised in that** the metering member (21) rests against the upper plate (45) along a linear contact region, and/or **in that** the lower plate (40) rests against the metering member (21) along a linear contact region and/or **in that** the disc (50) rests against the lower plate (40) along a linear contact region.

12. Coffee machine (1) comprising a device for dispensing soluble products according to one of claims 1 to 11.
